# EUROPEAN PATENT APPLICATION

(11) **EP 2 314 913 A1**
(43) Date of publication of application: **27.04.2011**
(21) Application number: 09013315.8
(22) Date of filing: 21.10.2009
(51) Int. Cl.: F21V 19/00

(54) **Light emitting unit carrier and light source comprising such a carrier**

(71) Applicant: Tyco Electronics Nederland B.V., 5222 AR 's-Hertogenbosch (NL)
(72) Inventor: van der Krogt, Jasper, 5235 NA's-Hertogenbosch (NL)
(74) Representative: Grünecker, Kinkeldey, Stockmair & Schwanhäusser Anwaltssozietät

(57) **Abstract**

The present invention relates to energy saving light sources and in particular to light sources based on light emitting diodes, LED, or organic light emitting diodes, OLED, as light emitting units. In particular, the present application relates to the assembly of these light emitting units (108) on an improved carrier. According to the present invention, a carrier (102) for at least one light emitting unit comprises a mounting frame with at least one light emitting mounting area, heat dissipating means for dissipating heat generated by said light emitting units and electrically conductive means, whereas the mounting frame as such forms said heat dissipating means and said electrically conductive means.

## Description

The present invention relates to a light emitting unit carrier for energy saving light sources and a light source comprising such a carrier.

In order to fulfill mandatory regulations regarding the energy consumption of light sources, such as the eco-design requirements for energy using products, 2005/32/EC, alternative techniques for replacing energy intensive lamps, such as traditional incandescent lamps, also called general lighting service lamps, GLS, and halogen lamps are needed.

A particularly advantageous technique is the use of a light emitting diode (LED) or an organic light emitting diode (OLED) in the light source. The advantage of LEDs can firstly be seen in the power saving potential. In contrast to a 10 to 15 W halogen lamp, a LED lamp with the same luminous flux only needs about 2 W. Further, LED light sources have lower heat losses. Further, LED light sources have the advantage of an extremely long service life, which is not impaired by frequent switching operations. OLEDs on the other hand can be designed in a way that they emit a diffuse, agreeable light which in particular can have a warmer color than the light emitted by most inorganic LEDs. Further, OLEDs do not contain any hazardous substances and can easily be recycled.

In order to replace for instance conventional MR11/GU4 halogen lamps, it is known to use a printed circuit board, PCB, with one or more light emitting diodes mounted thereon, and assemble this PCB in a MR11/GU4 housing.

When applying more than one light emitting unit, all of which direct their radiation into different spatial directions, several printed circuit boards have to be assembled and connected. Mechanical connections between these PCBs are complicated and expensive. Furthermore, heat dissipation through conventional printed circuit boards is very limited and, thus, unsatisfactory and mostly requires an additional heat sink or pipe to dissipate the heat from the PCB to the lamp base.

Consequently, there exists a need in the market for a carrier and a light source comprising this carrier, which has a reduced number of parts and can be manufactured in a particularly simple way and provides optimal heat dissipation for the heat created by the light emitting units, such as LEDs or OLEDs.

This object is solved by the subject matter of the independent claims.

According to the present invention a light emitting unit carrier is provided, which comprises a mounting frame onto which at least one light emitting unit can be directly mounted. According to the present invention the mounting frame as such - that is the frame itself - forms the electrically conductive means as well as the heat dissipating means. In other words, the mounting frame serves as the electric lead as well as the heat sink. This configuration does not only reduce the number of parts necessary for producing such a carrier, but also simplifies the manufacturing process thereof. A light emitting mounting area is any area on the mounting frame on which a light emitting unit can be mounted. Any materials suitable for achieving these properties can be used in order to manufacture said mounting frame. The mounting frame can, for example, be manufactured by using two or more different materials.

According to a preferred embodiment of the invention the mounting frame comprises at least one current regulating component mounting area for mounting at least one current regulating component. The current regulating component is for example a resistor or a capacitor. In addition to a light emitting unit it is thus possible to mount, for example, a resistor directly on the mounting frame, thereby increasing the design freedom of the number and types of light emitting units to be used.

Further, the inventive carrier preferably comprises at least one current track, which extends partially between the first and second current paths of the carrier according to a further preferred embodiment of the present invention. If several groups of first and second current paths are provided, a current track extends between each of said first and second current paths of each of said group. The provision of such current tracks also increases the design freedom of the carrier and eventually a light source comprising such a carrier and light emitting units. It also has the advantage of reducing the size of the mounting frame. The current track is for example arranged in a gap between said first and second current paths, such that upper and/or lower surfaces of said current track do not extend beyond upper and/or lower surfaces of said first and/or second current paths. Thereby an even more compact carrier structure is possible.

According to a further preferred embodiment, the mounting frame is formed by a thin sheet metal. The thickness of said sheet metal is chosen such that the frame can be bended in any direction, thus enabling a three-dimensional mounting frame. The thickness of the sheet metal is preferably less than 5 mm, more preferably less than 1 mm, even more preferable between 0.1 to 0.5 mm. The sheet metal material is for example brass, copper or steel, but could also be any other material known to the skilled person as being suitable for conducting electricity and heat. Through the usage of such a thin sheet metal the design freedom of the mounting frame is increased. Thereby almost any kind of shapes can be realized, such as a cube shape, spherical shape, spiral shape, semi-spherical shape, dome shape and the like through the usage of only one structural element. In common for these possible shapes is that the mounting frame encloses a space, which can for example be used for arranging parts of a light source, such as a driver circuit. Hence, a further advantage is that this embodiment provides a space saving structure. For example, in case of a spherical shaped mounting frame the interior thereof would be hollow and usable for arranging further components. According to this embodiment the electrically conductive means and the heat dissipating means are formed by one and the same material, thereby further simplifying the manufacturing process and the carrier as such.

According to a still further embodiment of the present invention the mounting frame is a cage-like mounting frame. A cage in the sense of this preferred embodiment is a structure forming an enclosure in which a space is confined, whereas said cage-like structure has at least one cage gap. This improves among others the heat dissipating function of the mounting frame, because ambient air can surround the different elements of the mounting frame in a more efficient manner. The cage-like structure can also have a cage opening. A cage opening defines an opening suitable to introduce electrical components through, such as an electronic control unit. However, depending on the size of such electrical components a cage opening might not be necessary and only the provision of cage gaps is sufficient. A cage gap is the space formed between adjacent mounting arms. The cage-like mounting frame can be manufactured by using several different types of materials.

Insulating stabilizing means for mechanically connecting said first and second current paths are provided according to a further preferred embodiment of the present invention. By providing these stabilizing means necessary mechanical stability can be provided despite the usage of for example a thin sheet metal. These insulating stabilizing means also fulfill the function of insulation between the first and second current paths (i.e. between the plus and minus path). Hence, stabilization of the carrier structure as well as insulation between the respective current paths is achieved by one and the same element, thereby further simplifying the carrier structure. The insulating stabilizing means can be formed through an epoxy provided, for example, only on one side of said first and second current paths. Preferably said insulating stabilizing means are overmolded plastic elements, thereby providing an easy and cost efficient way of forming said insulating stabilizing means.

According to a further preferred embodiment said mounting frame has at least one bent portion. A bent portion can either be a continuous bent portion, or a discontinuous bent portion. A continuous bent portion refers to a portion which forms a smooth cross-over between the surfaces. A discontinuous bent portion on the other hand forms a sharp edge at the cross-over. The continuous cross-over is particularly preferred. By providing at least one bent portion it is possible to form light emitting mounting surfaces in different planes. Hence, a further advantage of this preferred embodiment is that a possible three-dimensional form allows on the one hand that air can surround the heat generating light emitting unit, and on the other hand that when using a plurality of light emitting units, same can be directed in any direction so that they emit light rays in different spatial directions. By providing at least one bent portion, for example three bent portions, it is possible to provide a first mounting area, which is perpendicular to a longitudinal axis of the carrier; a second mounting area which is arranged under an angle between 0 and 90 degrees to said longitudinal axis; and a third mounting area arranged parallel to said longitudinal axis. The range from 0 to 90 degrees does not include the angles 0 and 90 degrees. The second group is preferably arranged at an angle of between 30 to 60 degrees, in particular 45 degrees.

According to a still further preferred embodiment the mounting frame has a mounting base and at least one mounting arm extending from said mounting base, whereas said mounting arm has at least one bent portion, such that the upper surface of said mounting base is arranged under a predefined angle with respect to the upper surface of said mounting arm. The mounting arm is formed by a first and second current path. The length of each mounting arm is chosen in view of the desired usage. It is for example possible to provide a mounting frame for a light tube. Hence, the length of each mounting arm would correspond to the necessary length of the light tube.

According to a preferred embodiment the carrier further comprises a separate connection element for connecting a plurality of light emitting units in parallel. This electrical connection element may for instance be an electrical connection ring having protruding tags that are electrically contacting the mounting frame.

The present invention further relates to a light source comprising a carrier according to the present invention and at least one light emitting unit. In order to provide protection from ambient influences, the light source may comprise a translucent cover, which at least partly accommodates the carrier and the electronic control unit.

Depending on the particular field of application, the translucent cover may at least partly be covered with a luminescent layer and/or a reflective coating. The reflective coating may be particularly advantageous when using the light source within luminaries that are intended to produce directed light in only one direction but need a high luminous flux.

The light source according to the present invention may use light emitting units with either a white color or any other color or may use a combination of differently colored light emitting units, preferably together with a luminescent layer on the translucent cover in order to achieve a so-called warm tone light color. Also light emitting units with different intensities may be implemented if so desired. The light emitting unit is preferably a LED, in particular a SMD LED.

In order to achieve optimal heat dissipation, the base element of the light source is fabricated from an electrically insulating, thermally conductive material and the mounting frame is attached to said base element in a way that the excess heat is dissipated by the base. The base can for instance be formed by a ceramic material. According to a possible way of assembly, the mounting frame may be pressed to the base using a separate pressure ring.

According to a still further preferred embodiment the plurality of light emitting units comprise at least a first, a second and a third group of light emitting units, whereas the first group emits light mainly in a direction perpendicular to the longitudinal axis of the light source, the second group emits light mainly under an angle between 0 and 90 degrees to said longitudinal axis and said third group emits light mainly in the direction of said longitudinal axis. The range from 0 to 90 degrees does not include the angle 0 and 90 degrees. The second group is preferably arranged at an angle of between 30 to 60 degrees, in particular 45 degrees. The longitudinal axis of the light source is parallel to the longitudinal axis of the socket into which said light source is to be mounted. The different groups of light emitting units can have different light emitting intensities, colors and the like, i.e. different light emitting characteristics.

The foregoing and other features of the present invention will now be described with reference to the accompanying drawings. In the drawings, the same components have the same reference numerals. The drawings are incorporated into and form a part of the specification for the purpose of explaining the principles of the invention. However, the drawings are not to be construed as limiting the invention to only the illustrated and described examples of how the invention can be used and made. Moreover, different aspects and details of the embodiments explained in the following may form inventive solutions in alternative combinations or arrangements. Further features and advantages will become apparent from the following and more detailed description of the invention, which is illustrated in the accompanying drawings, wherein:
- **Fig. 1**: shows a partly exploded perspective view of a light source using a carrier ac- cording to the present invention;
- **Fig. 2**: is a perspective view of a carrier according to the present invention;
- **Fig. 3**: is a top view of the mounting frame after the first stamping step;
- **Fig. 4**: is a top view of the mounting frame after adding the overmolded plastic ele- ment;
- **Fig. 5**: is a top view of the light emitting unit carrier after mounting of the electronic components;
- **Fig. 6**: is a top view onto the carrier after the bending step;
- **Fig. 7**: is a side view of the bent carrier;
- **Fig. 8**: is a perspective view of the electronic drive circuit;
- **Fig. 9**: is a perspective view of the translucent bulb;
- **Fig. 10**: is a perspective view of the pressure ring;
- **Fig. 11**: is a perspective view of the lamp base;
- **Fig. 12**: shows the carrier assembled with the pressure ring;
- **Fig. 13**: shows the arrangement of Fig. 12 after inserting the drive circuitry;
- **Fig. 14**: shows the lamp before touching the translucent bulb;
- **Fig. 15**: shows the completely mounted light source; and
- **Fig. 16** - **18**: show different embodiments of a mounting frame.

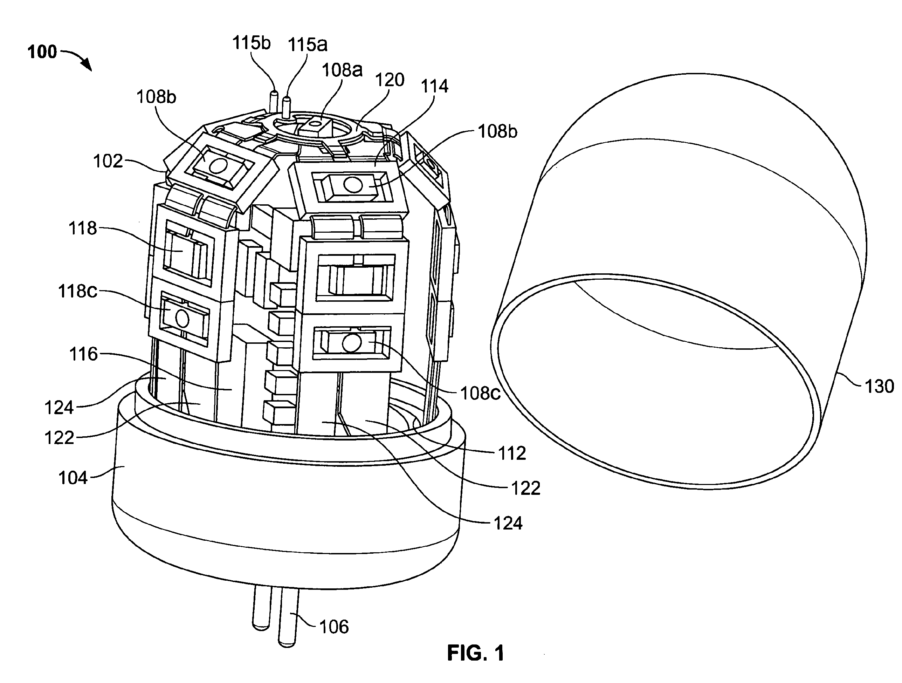

According to a particular embodiment of the present invention, Fig. 1 shows a light source 100, which in the following also will be referred to as a lamp. According to this particular design, the light source is adapted to replace a halogen lamp of the type GU4. However, it is clear for a person skilled in the art that the inventive assembly principle may also be used with all other lamp forms and socket geometries, such as general lighting services (GLS) lamps, in particular LED light tubes. Furthermore, the following embodiments show surface mounted (SMD) light emitting diodes, LEDs, as light emitting units. However, any other type of LEDs can also be used.

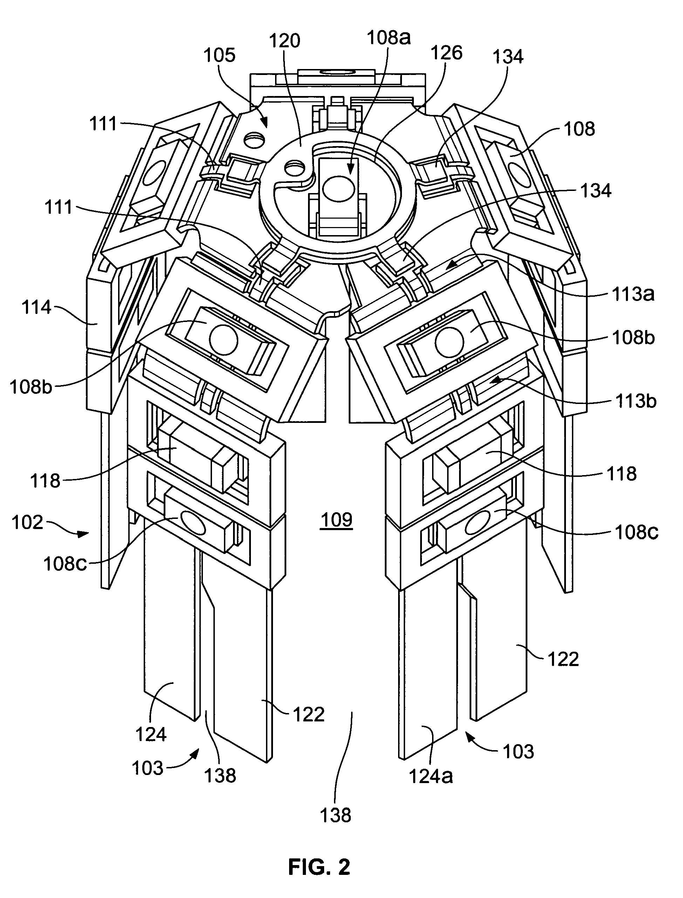

As shown in Fig. 1, the light source 100 comprises a light emitting diode, LED, carrier 102, which is fixed at a ceramic base 104. This base 104, however, can be fabricated from any electrically insulating, heat conductive material. Contact pins 106 establish the electrical connection to a light source socket, which is not shown in the figures. On the carrier 102, a plurality of light emitting units 108a, b, c are mounted, in the present case 11 SMD LEDs. The carrier 102 comprises a cage-like mounting frame 110, which is fabricated by stamping and bending from a thin metal sheet. In the shown embodiment the thickness of the mounting frame is 0.3mm. The mounting frame 110 consists of five mounting arms 103 and a mounting base 105 as best seen in figure 2. The mounting base 105 carries one LED 108a, whereas each mounting arm 103 carries two LEDs 108b, 108c. Each mounting arm 103 is furthermore pressed to the inside of the base element 104 by means of a pressure ring 112.

By pressing the carrier 102 to the base element 104, excess heat generated by the LEDs 108a, b, c is conducted to the base element 104 and can be dissipated into the ambience from there. In the shown embodiment, the mounting frame 110 is mechanically stabilized by a plastics overmold element 114. The cage-like mounting frame 110 itself is bent to have an essentially dome-shaped form, which provides a cavity 109 for accommodating the driver electronics 116. By way of example this driver electronics unit 116 comprises a printed circuit board, whereon an IC (integrated circuit) and several electronic devices, such as inductors and capacitors, are mounted.

The carrier furthermore carries resistors 118, which are needed as the series resistance of the LED 108.

Each mounting arm 103 has a first sub-arm 122 and a second sub-arm 124, which are separated by a gap. The sub-arm 122 forms the first current paths 122, whereas the second sub-arm 124 forms the second current paths 124. In fact, the sub-arms 122, 124 also form the heat dissipating means together with the mounting base 105.

Each mounting arm 103 has two bent portions 113a, 113b, whereas the first bent portion 113a is between the mounting base 105 and the mounting arm 103, and the second bent portion 103b is formed between a first light emitting unit mounting area and a second light emitting unit mounting area of the mounting arm 103 itself.

From the mounting base 105 extends a current track 111, which is arranged in the gap between said first- and second-sub arms 122, 124.

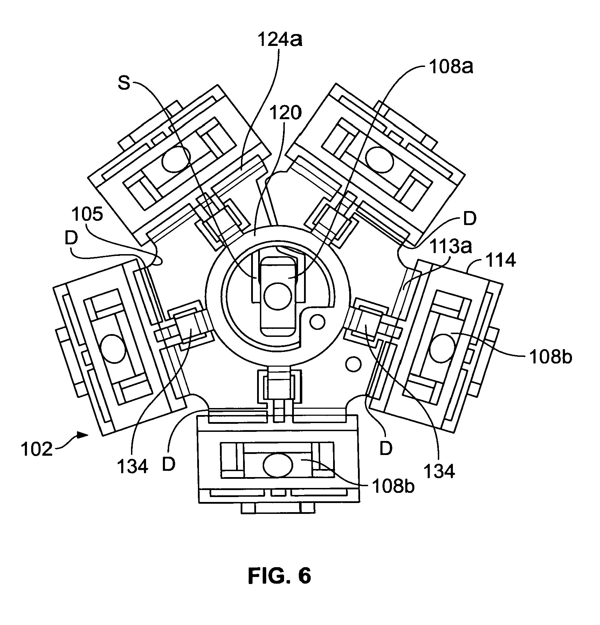

The electrical current flows from the first terminal 115a (+) coming from the driver circuit 116 to a connection ring 120 mounted on the mounting base 105 (see figure 6) . The connection ring 120 distributes the electrical current to each of the current tracks 111, which in turn ensures that the current flows to the resistor 118. From the resistor 118 the current path continuous to the sub-arm 122 and hence to the LEDs 108b, c. The current thereafter continues to the sub-arm 124 and back to the second terminal 115b (-) of the driver circuit 116.

In order to protect the lamp 100, a translucent bulb-shaped cover 130 is provided. Apart from the mechanical protection, however, the translucent cover 130 can also fulfill functional tasks, for instance by carrying reflective and/or luminescent layers.

The light emitting unit carrier 102 is shown as a separate part in Fig. 2. As can be seen from this figure, the first current paths 122 of each of the five mounting arms 103 with two LEDs 108b, c each are connected in parallel by means of the separate connection ring 120. This facilitates the assembly procedure because an insulating ring 126 can be used for separating plus- and minus-terminal. The serial resistors 118 as well as the LEDs 108a, b, c are formed as surface mount devices SMD. By bending the mounting frame 110 into a dome-shaped three-dimensional form, the radiation of the LEDs 108a, b, c can be directed into different spatial directions, whereby modeling the geometric emission characteristics of regular incandescent lamps. The plastics overmolds 114 provide mechanical stability for the mounting frame 110 and mounting aids for the pick-and-place machines when assembling the electronic components 108a, b, c, 118 onto the carrier 102. The plastic overmolded elements 114 also function as insulation means between the first and second current paths 122, 124.

The LEDs 108c can form a first group of light emitting units having for example a different colour and/or intensity than the LEDs 108b, which form a second group of light emitting units. The LED 108a can thus form a third light emitting unit group having a lighting characteristics which differs from the first and/or second group.

Figure 2 also shows the cage-like structure of the mounting frame 110, since the mounting arms 103 confine an interior space 109. The cage-like mounting frame 110 has several cage gaps 138 formed between the different mounting arms 103 and the sub-arms 122, 124. Also a cage opening is provided opposite to the mounting base 105, through this opening the electronic control unit 116 will be introduced into said space 109, in order to confine said control unit 116 in said cage-like mounting frame 110.

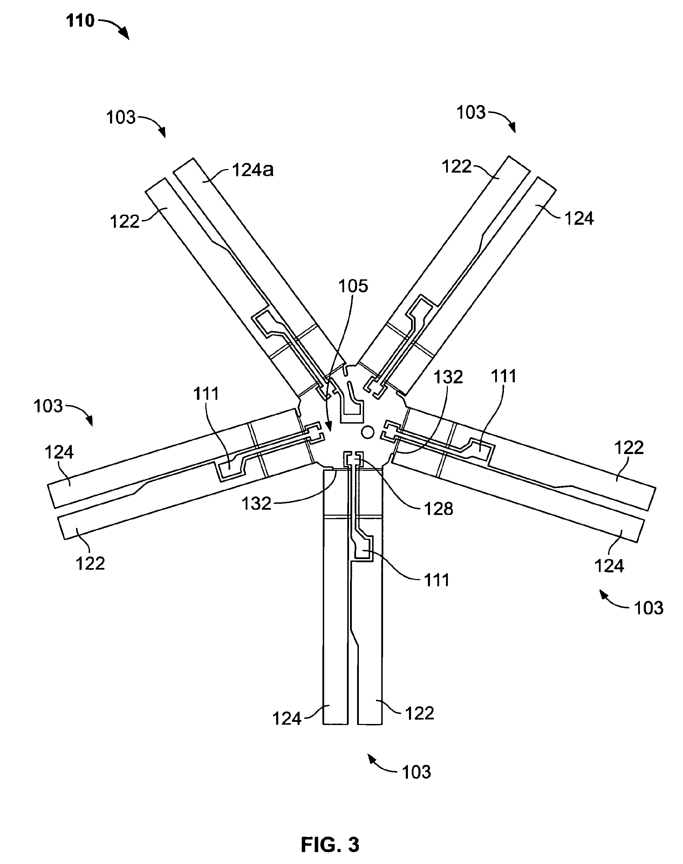

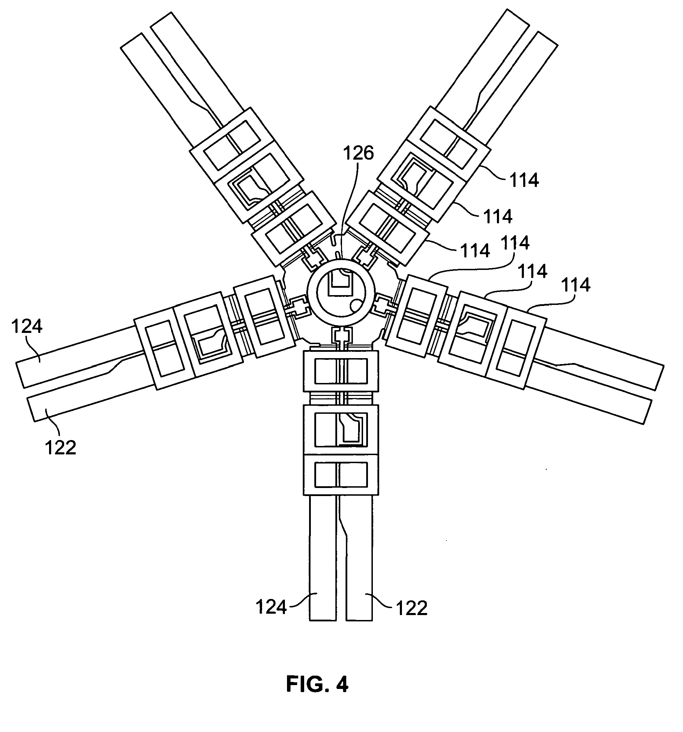

In the following, the fabrication procedure for fabricating a light source 100 according to Fig. 1 and a carrier 102 will be explained in detail with reference to Fig. 3 to 15.

In a first fabrication step, a thin metal sheet is stamped in a way that five mounting arms 103 are formed, each extending from a mounting base 105 and having a first and a second sub-arm 122, 124 and a current track 111 extending between said first and second sub-arms 122, 124.

Next, plastic overmold elements 114 and an insulating ring 126 are added to the flat mounting frame 110 in order to stabilize the various mounting arms 103 Thereafter the LEDs 108a, b and c and the resistors 118 are mounted on the mounting frame.

On the insulating ring 126 the connection ring 120 is to be mounted in a subsequent step. Of course, the insulation ring 120 could also have any other shape, such as square of polygonal, and can also be fabricated as a separate part.

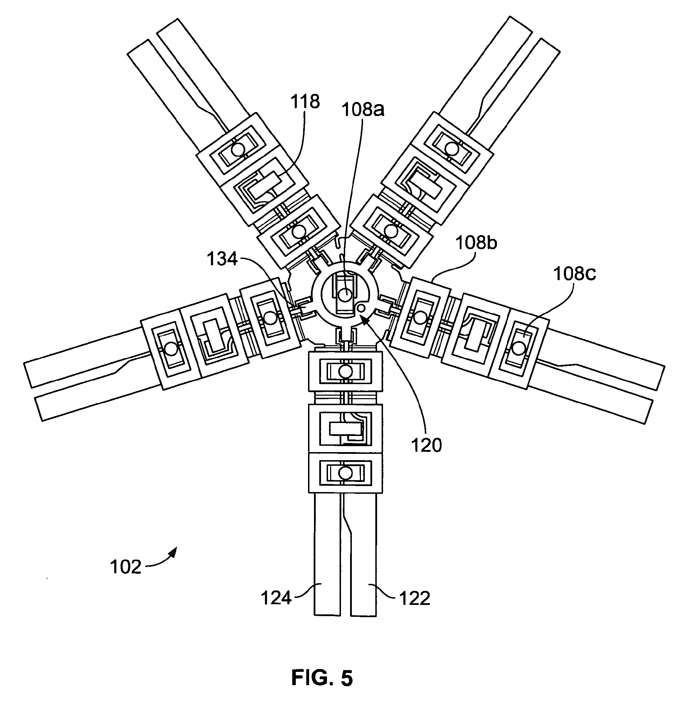

Fig. 5 shows the flat carrier 102 after the light emitting units 108a, b, c and the resistors 118 have been mounted. This can for instance be done in a reflow soldering process because in the particular embodiment shown here the LEDs 108a, b, c and the resistors 118 are formed as SMD components. Furthermore, before or after mounting the electronic components 118a, b, c, 108, the sub-arms 124 are disconnected from the mounting base 105 as is best seen in figure 6, which clearly shows a distance D between the respective sub-arms 124 and said mounting base 105. The separation of one sub-arm 124a differs from the separation of the other sub-arms 124, because said sub-arm 124a also ensures the current flow to the LED 108a mounted on the mounting base 105. Hence a different separation S is formed between said sub-arm 124a and mounting base 105. Then, a connection ring 120 which is for instance fabricated as a separate stamped and bent metal part with protrusions 134 can be mounted and thus be electrically connected to said current tracks 111 in a way that all the LEDs are connected in parallel. This can also be done by reflow soldering within the same step as the soldering of the electronic components in order to reduce the assembly time.

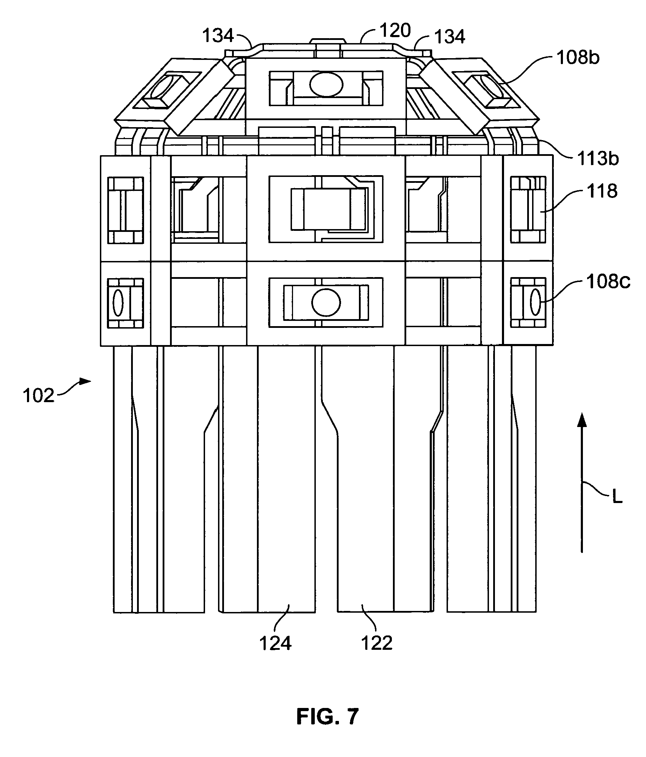

In a next fabrication step, which leads to the cage-like carrier structure 102 shown in Fig. 6 and 7, the five mounting arms 103 of the mounting frame 110 are bent to form a three-dimensional carrier 102. By the bending step a cage-like carrier 102 having a dome-shaped structure is formed. In particular, each mounting arm 105 comprises two bending portions 113a, 113b so that three different light-emitting angles with respect to the longitudinal axis L of the carrier 102 are created. In particular, the first group of LEDs 108c emit light perpendicularly to the longitudinal axis L, the second group of LEDs 108b emit light rays under an angle of 45° with respect to said longitudinal axis L, and the third group LED 108c emits light along the longitudinal axis L of the carrier 102. Put differently, i.e. defined with respect to the carrier 102 structure as such, the LED mounting area of the LEDs 108c is arranged parallel to the longitudinal axis L of the carrier 102; the LED mounting area of the LEDs 108b is arranged under an angle of 45° with respect to said axis L; and the LED mounting area of said LED 108a is arranged perpendicular to said axis L.

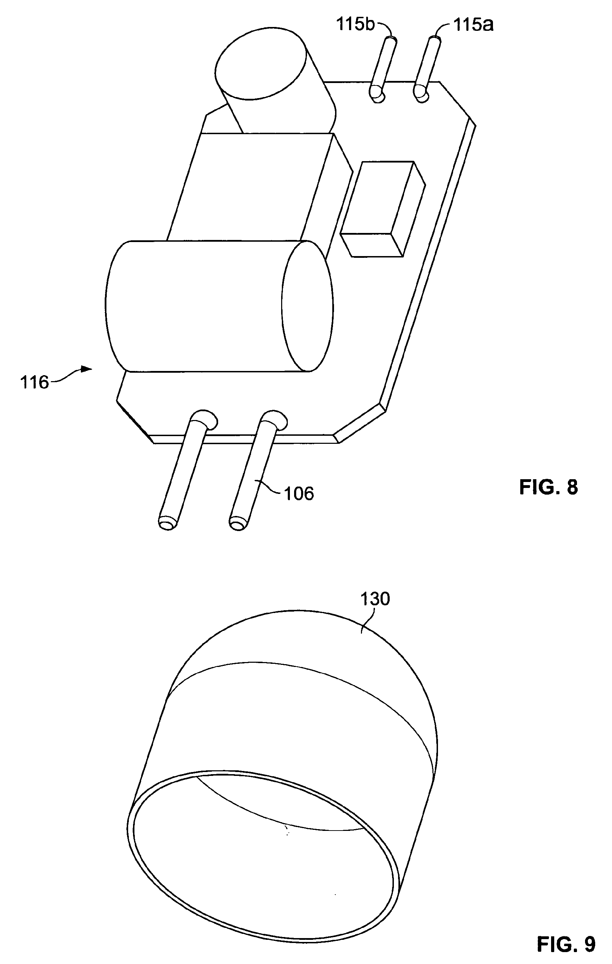

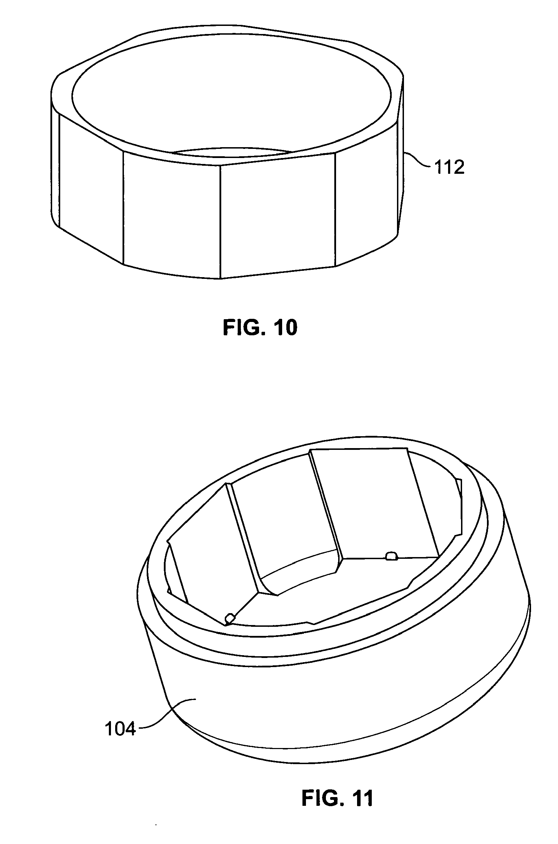

In order to complete the assembly of the light source the parts shown in Fig. 8 to 11 may additionally be employed: an electronic control unit containing the driver electronics 116 of Fig. 8, a pressure ring 112 of Fig. 10, a ceramic base 104 (Fig. 11) and a translucent bulb-shaped cover 130 shown in Fig. 9.

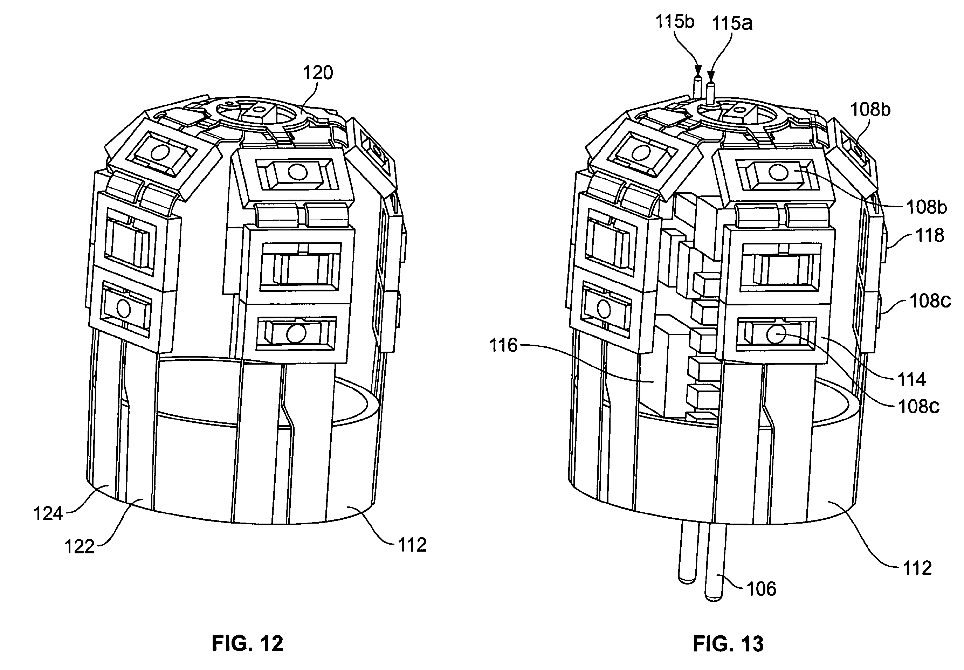

As shown in Fig. 12, first the pressure ring 112 is fitted inside the five mounting arms 103 of the carrier 102. Next, the control unit 116 is mounted in a way that the two pins (+) and (-) are plugged through the respective openings in the carrier 102. This arrangement is depicted in Fig. 13.

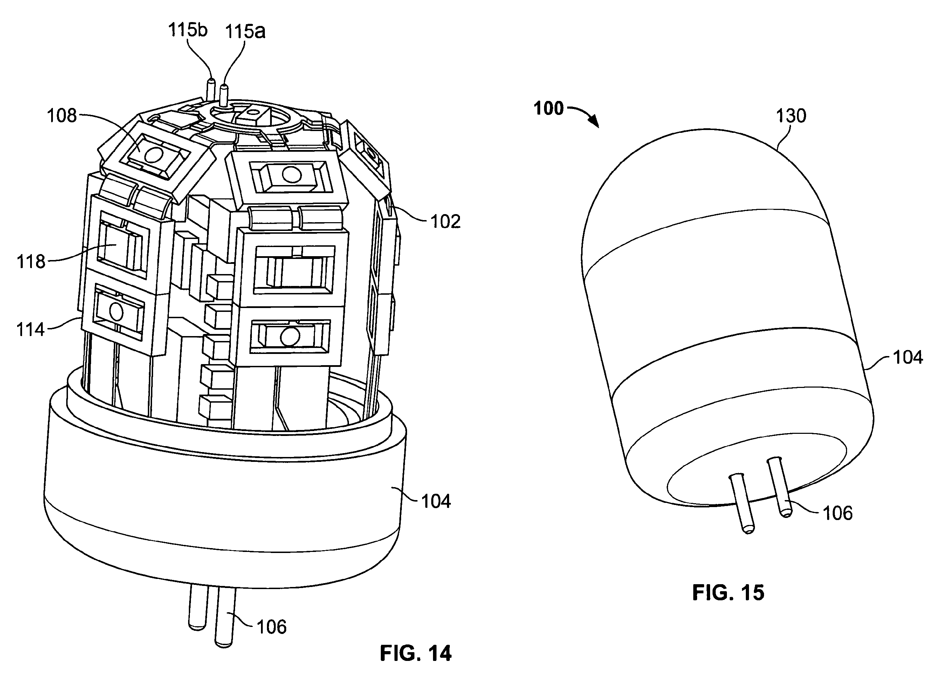

With reference to Fig. 14, now the ceramic base 104 is mounted in a way that the connection pins 106 of the circuit board 116 are led to the outside, where they can contact a corresponding socket (not shown in the figures). The mounting of the translucent cover 130 and fixing the same to the base 104 completes the fabrication of the light source 100 as shown in figure 15, thus sealing the components of the light source against external influences.

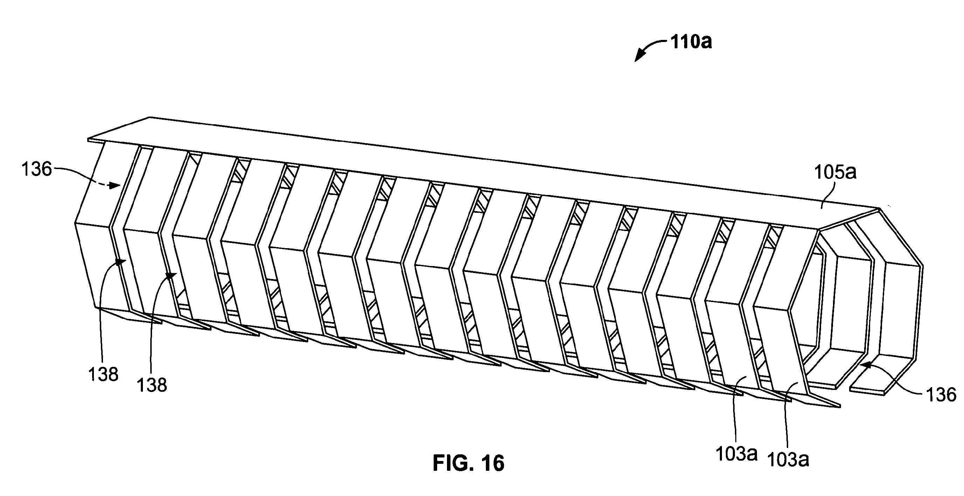

Figures 16 to 18 show alternative embodiments of a cage-like mounting frame 110. The intention of these figures is only to show further examples of cage-like shapes. Hence, no details regarding light emitting units, sub-arms, resistors and the like are shown in these figures.

Figure 16 for example shows a cage-like mounting frame 110a suitable for a light tube, such as LED light tube. It has several mounting arms 103a extending from a mounting base 105a. Each mounting arm 103a forms three light emitting unit mounting areas and/or current regulating component mounting areas. Of course, also the mounting base 105a forms said light emitting unit mounting area and/or current regulating component mounting area.

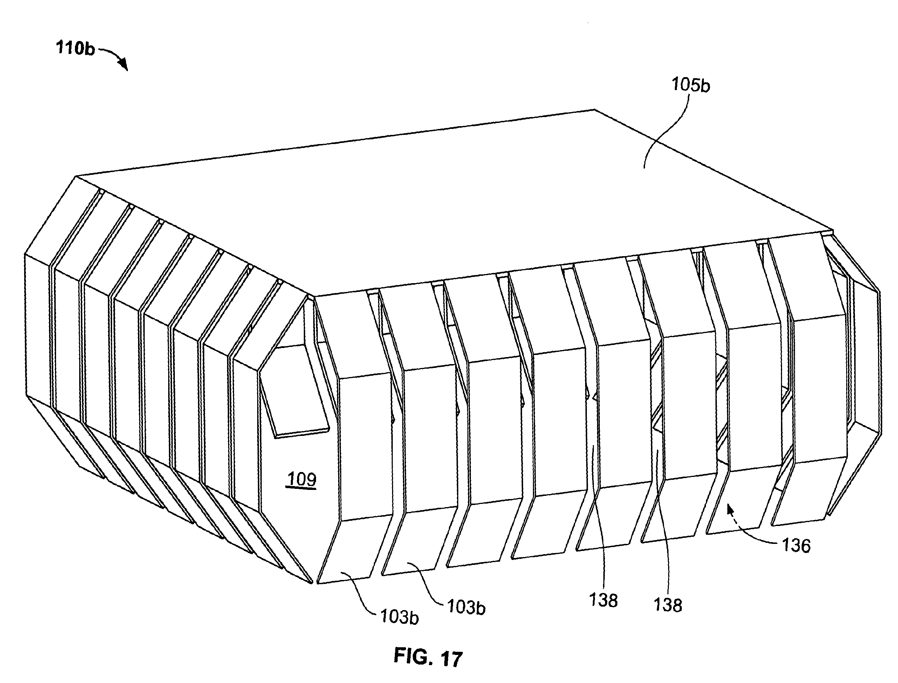

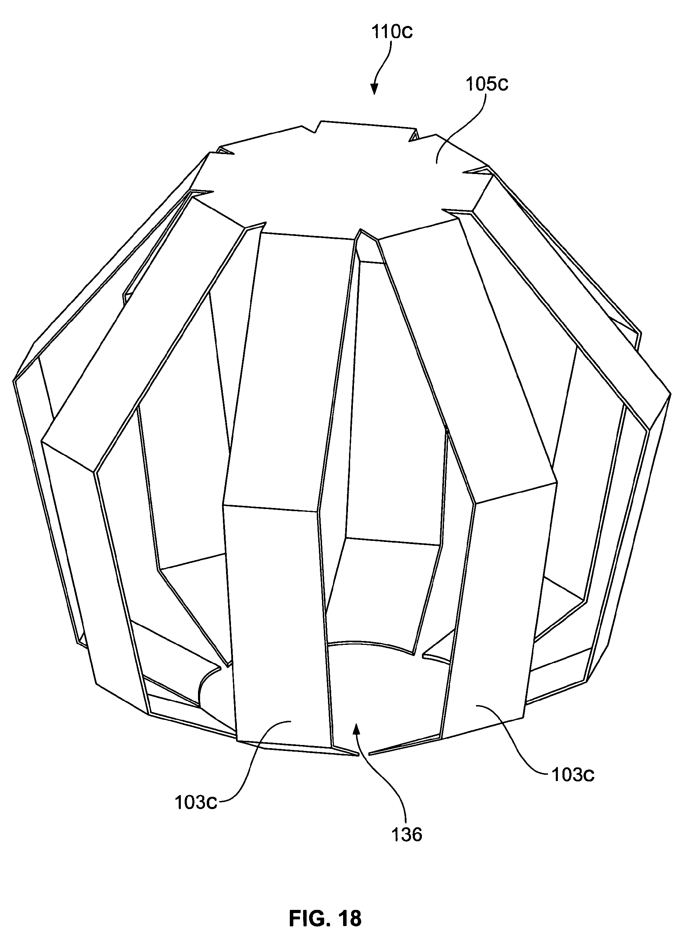

Figure 17 shows a cage-like mounting frame 110b with an almost cube-like shape having several mounting arms 103b and a mounting base 105b. Also figure 18 shows a cage-like mounting frame 110c with mounting arms 103c and a mounting base 105c.

In common for all of the shown cage-like mounting frames 110, 110a, b, c is that they confine an interior space 109 and have several cage gaps 138. The shown embodiments also have cage openings 136. The cage gaps 138 are formed between the respective mounting arms, whereas the cage opening 136 is the area in which no mounting arm extends into. Hence, the cage openings are indicated with reference numeral 136. Accordingly, the tube-like shaped mounting cage 110a according to figure 16 has two cage openings 136 and several cage gaps 138. The embodiments according to figures 17 and 18 also have several cage gaps 138, but only one cage opening 136. It is clear from the drawings that with such a cage-like mounting structure it is possible to introduce components into said interior space 109. Also an embodiment with no cage opening can be realized, if no components are to be introduced into the interior space 109 or if the components can be introduced through the cage gaps. Even if not possible to introduce such components through the cage gaps 138, it still is not necessary to provide a cage opening 136 if the components are arranged relative to the mounting frame during the bending operation. Thus, while the mounting frame is still in its flat shape the electrical components can be brought into position and become confined in the interior space while firming the bent portions of the respective mounting arms. In others words, the manufacturing step of arranging the electrical drive components is carried out before the manufacturing step of bending the mounting arms of the mounting frame while producing such an embodiment.

### Reference Numeral List

| **Reference Numeral** | **Description** |
|---|---|
| 100 | light source |
| 102 | carrier |
| 103, 103a, b, c | mounting arms |
| 105, 105a, b, c | mounting base |
| 106 | contact pins |
| 108a,b , c | light emitting unit |
| 109 | interior space |
| 110, 110a, b, c | mounting frame |
| 111 | electrical current track |
| 112 | pressure ring |
| 113a, b | bent portion |
| 114 | overmolded plastic element |
| 115a, b | first and second terminal |
| 116 | electronic control unit containing the driver electronics |
| 118 | resistor |
| 120 | connection ring |
| 122 | first sub-arm |
| 124,124a | second sub-arm |
| 126 | insulation ring |
| 130 | translucent cover |
| 132 | web |
| 134 | protrusions |
| 136 | cage opening |
| 138 | cage gap |
| D | distance between sub-arm 124 and mounting base 105 |
| S | separation between sub-arm 124a and mounting base 105 |
| L | longitudinal axis of the carrier 102 |

## Claims

1. Light emitting unit carrier (102) comprising:
a mounting frame (110) comprising at least one light emitting unit mounting area for mounting at least one light emitting unit directly thereon,
electrically conductive means providing at least one of a first current path for connection with a first terminal of at least one light emitting unit, and at least one of a second current path for connection with a second terminal of said at least one light emitting unit, and
heat dissipating means for dissipating heat generated by said at least one light emitting unit,
wherein said mounting frame (110) as such forms both of said electrically conductive means and said heat dissipating means.

2. Carrier according to claim 1, **characterized in that** said mounting frame (110) comprises at least one current regulating component mounting area for mounting at least one current regulating component (118).

3. Carrier according to any of the preceding claims, **characterized by** further comprising at least one current track (111) which extends partially between said first and second current paths (122, 124).

4. Carrier according to any of the preceding claims, **characterized in that** said mounting frame (110) is formed by a thin sheet metal.

5. Carrier according to any of the preceding claims, **characterized in that** said mounting frame (110) is a cage-like mounting frame.

6. Carrier according to any of the preceding claims, **characterized by** further comprising insulating stabilizing means (114) for mechanically connecting said first and second current paths (122, 124).

7. Carrier according to claim 6, **characterized in that** said insulating stabilizing means (114) is at least one overmolded plastic element (114).

8. Carrier according to any of the preceding claims, **characterized in that** said mounting frame (110) has at least one bent portion (113a, 113b).

9. Carrier according to any of the preceding claims, **characterized in that** said mounting frame (110) comprises a mounting base (105) and at least one mounting arm (103) extending from said mounting base (105), whereas said mounting arm (103) has at least one bent portion (113a, 113b), such that the upper surface of said mounting base (105) is arranged under a predetermined angle with respect to the upper surface of said mounting arm (103).

10. Carrier according to any of the preceding claims, **characterized by** further comprising a separate connection element (120) for connecting a plurality of light emitting units (108) in parallel.

11. Light source (100) comprising:
a light emitting unit carrier (102) according to any of the preceding claims, and
at least one light emitting unit (1 08a, b, c) mounted on said carrier (102).

12. Light source according to claim 11, further comprising a base element (104) for fixing said carrier (102) and for electrically connecting the light source (100) to a light source socket.

13. Light source according to any of claims 11 and 12, wherein an electronic control unit (116) is mounted in a way that it is at least partly encompassed by said carrier (102).

14. Light source according to any of claims 11 to 13, **characterized in that** said light emitting unit (1 08a, b, c) is a light emitting diode, LED.

15. Light source according to any of claims 11 to 14, **characterized in that** a plurality of light emitting units (108a, b, c) are provided, which are arranged such that light is emitted into different spatial directions.

16. Light source according to claim 15, wherein said plurality of light emitting units comprises at least a first, a second and a third group of light emitting units, whereas the first group (108c) emits light mainly in a direction perpendicular to the longitudinal axis (L) of the carrier (102), the second group (108b) emits light mainly under an angle between 0 and 90 degrees to said longitudinal axis (L) and said third group (108a) emits light mainly in the direction of said longitudinal axis (L).

## Amended claims

### Amended claims in accordance with Rule 137(2) EPC.

**1.** Light emitting unit carrier (102) comprising:
a mounting frame (110) comprising at least one light emitting unit mounting area for mounting at least one light emitting unit directly thereon,
electrically conductive means providing at least one first current path for connection with a first terminal of at least one light emitting unit, and at least one second current path for connection with a second terminal of said at least one light emitting unit, and
heat dissipating means for dissipating heat generated by said at least one light emitting unit,
wherein said mounting frame (110) as such forms both of said electrically conductive means and said heat dissipating means,
**characterized in that**
said mounting frame (110) is a cage-like mounting frame comprising a plurality of mounting arms (103) each extending from a mounting base (105).

**2.** Carrier according to claim 1, **characterized in that** said mounting frame (110) comprises at least one current regulating component mounting area for mounting at least one current regulating component (118).

**3.** Carrier according to any of the preceding claims, **characterized by** further comprising at least one current track (111) which extends partially between said first and second current paths (122, 124).

**4.** Carrier according to any of the preceding claims, **characterized in that** said mounting frame (110) is formed by a thin sheet metal.

**5.** Carrier according to any of the preceding claims, **characterized by** further comprising insulating stabilizing means (114) for mechanically connecting said first and second current paths (122, 124).

**6.** Carrier according to claim 5, **characterized in that** said insulating stabilizing means (114) is at least one overmolded plastic element (114).

**7.** Carrier according to any of the preceding claims, **characterized in that** said mounting frame (110) has at least one bent portion (113a, 113b).

**8.** Carrier according to any of the preceding claims, **characterized in that** said mounting arm (103) has at least one bent portion (113a, 113b), such that the upper surface of said mounting base (105) is arranged under a predetermined angle with respect to the upper surface of said mounting arm (103).

**9.** Carrier according to any of the preceding claims, **characterized by** further comprising a separate connection element (120) for connecting a plurality of light emitting units (108) in parallel.

**10.** Light source (100) comprising:
a light emitting unit carrier (102) according to any of the preceding claims, and
at least one light emitting unit (108a, b, c) mounted on said carrier (102).

**11.** Light source according to claim 10, further comprising a base element (104) for fixing said carrier (102) and for electrically connecting the light source (100) to a light source socket.

**12.** Light source according to any of claims 10 and 11, wherein an electronic control unit (116) is mounted in a way that it is at least partly encompassed by said carrier (102).

**13.** Light source according to any of claims 10 to 12, **characterized in that** said light emitting unit (108a, b, c) is a light emitting diode, LED.

**14.** Light source according to any of claims 10 to 13, **characterized in that** a plurality of light emitting units (108a, b, c) are provided, which are arranged such that light is emitted into different spatial directions.

**15.** Light source according to claim 14, wherein said plurality of light emitting units comprises at least a first, a second and a third group of light emitting units, whereas the first group (108c) emits light mainly in a direction perpendicular to the longitudinal axis (L) of the carrier (102), the second group (108b) emits light mainly under an angle between 0 and 90 degrees to said longitudinal axis (L) and said third group (108a) emits light mainly in the direction of said longitudinal axis (L).
